# EUROPEAN PATENT APPLICATION

(11) **EP 1 772 306 A2**
(43) Date of publication of application: **11.04.2007**
(21) Application number: 06445065.3
(22) Date of filing: 29.09.2006
(51) Int. Cl.: B60N 2/14

(54) **A vehicle seat rotative assembly**

(30) Priority: 30.09.2005 SE 0502152
(71) Applicant: Permobil AB, 861 23 Timrå (SE)
(72) Inventor: Öjersson, Karl Magnus, 511 63 Skene (SE)
(74) Representative: Wennborg, Johan

(57) **Abstract**

A vehicle seat rotating and displacing assembly comprising a base unit which is designed to be fitted to the floor of an automotive vehicle or the like, and a mounting part to which a vehicle seat is intended to be affixed, wherein the mounting part can be rotated and displaced linearly relative to the floor of the vehicle when the assembly is fitted to a vehicle. The base unit (1) is designed to be affixed immovably to the floor of the vehicle and the mounting part (2) is linearly displaceable and rotatable relative to the base unit.

## Description

### Field of invention

The present invention relates to a vehicle seat rotating and displacing assembly of the kind defined in the preamble of the accompanying claim 1.

The assembly can be used, for instance, to facilitate seating of a person in the seat or departure of a person from the seat, and can be mounted in the vehicle either during its manufacture or subsequent thereto.

### Background of the invention

To facilitate the entry into and the exit from cars and other automotive vehicles there is sometimes used different types of rotatable assemblies or rotatable plates on which the driver's seat or a passenger seat is mounted so as to enable it to be rotated about a vertical axis relative to the floor of the vehicle. The rotatable assembly is normally fixed to the floor of the vehicle and the seat mounted on the assembly. This enables the seat to be rotated between a forwardly directed driving or travelling position and a direction in which the seat faces outwardly in a vehicle entering or vehicle exiting position. Such a seat rotating assemblies are particularly used in the case of cars and minibuses that are adapted for physically handicapped people. In order to make it easier, and in many instances even possible, for physically handicapped persons to travel in or drive a car, it is among other things necessary to enable such persons to enter and to leave the vehicle with comparative ease. Because the rotatable assembly allows the vehicle seat to be rotated towards the door opening there is provided more movement space and easier access, for instance if a handicapped person needs to move from a wheelchair to the driver's seat of the vehicle. Certain rotatable assemblies may also be designed to enable a wheelchair seat removed from the wheel chair chassis can be fastened directly to the assembly, wherewith the wheelchair seat thus replaces the conventional vehicle seat. This transfer of the wheelchair seat is also greatly facilitated by the rotatable assembly, which enables the seat to be placed in the vehicle and mounted with the seat rotated through 90° to the longitudinal axis of the vehicle. Although such rotatable assemblies may be operated manually, electrically manoeuvred and driven rotatable assemblies have become more usual in recent times.

Such rotatable assemblies need to have a number of desired properties in order to function satisfactory. It is, of course, extremely important that the assemblies fulfil valid collision requirements and standards. In order to avoid injury to a seat user in the case of a collision to the greatest possible extent, it is imperative that the assembly can be properly anchored in the vehicle. In addition, it must be possible to anchor the seat securely to the assembly and the components of the assembly must be securely held together. All this in order to avoid the seat moving or loosening in the event of a collision or in the event of abrupt emergency braking of the vehicle. For traffic safety reasons, it is also desirable that the assembly can be used together with the normal safety belts of the vehicle and preferably without requiring the belts to be adapted, or only requiring some slight adaptation.

Another desirable property is that the seat can be moved rectilinearly in the longitudinal direction of the vehicle, in addition to being able to rotate about a vertical axis. Such longitudinal displacement of the seat can be used partly to provide a comfortable and ergonomic driving or travelling position, and partly also to facilitate rotation between the front-facing and side-facing seat positions when a person is seated in the seat, particularly when the person concerned has impaired leg movement.

A particular benefit is afforded when the seat can be rotated and displaced longitudinally simultaneously. Such synchronized rotation and linear displacement enables relatively large seats to be rotated to an outwardly facing and an inwardly facing position, even in vehicles that have a confined interior. In the case of seats that are placed at the driver's place in the car or at a front passenger place, it has been found beneficial when rotation of the seat can be commenced when the seat is in a retracted position in which the axis of rotation is level with or rearwardly of the B-post of the vehicle, i.e. the rear post of the front door. The outwardly directed rotational movement is then followed during forward displacement of the seat and its axis of rotation, until said axis is located slightly forwardly of the B-post and the seat is directed about 90° or more outwardly in relation to the forward direction of the vehicle. Such synchronized rotation and displacement provides relatively satisfactory leg space during said movement, while enabling seats that have a relatively large length to be rotated in the vehicle interior without danger of rear parts of the seat striking, for instance, the longitudinal central console of the vehicle.

A further desirable feature of the assembly is that it has the lowest possible structural height. This is so that it can be used together with standard seats, even in low-sealing coupes and also to reduce the torque around the attachment of the assembly to the floor that may occur in the event of a collision or in abrupt braking of the vehicle.
Another desirable property of the assembly is that it has a simple and functionally dependent construction that includes only a few components and then particularly only a few movable components.

### Prior Art

US 6,027,170 describe a rotatable vehicle chair whose rotational movement is guided by an orbital guide assembly. The orbital guide assembly includes a lower and an upper plate. The plates include two pairwise co-acting male and female elements for guiding rotation of the upper plate in relation to the lower plate. The assembly described in US 6,027,170 enables the vehicle chair to be rotated manually between two end positions, by first rotating the upper plate about the first male element and thereafter rotating the upper plate about a second male element after the person occupying the seat has shifted his/her centre of gravity.

An earlier known electrically driven vehicle chair rotating assembly includes a lower base unit and an upper mounting unit which is rotatable in relation to the base unit and to which a vehicle seat mounting part can be fastened. The base unit includes a pair of rails that are fastened to the floor of the vehicle so as to extend parallel with longitudinal direction of the vehicle and that enable the base unit to be displaced longitudinally in relation to the floor of the vehicle. First drive means are intended to drive the base unit along the rails and second drive means are intended for rotation of the mounting part relative to the base unit. The beneficial simultaneous rotation and displacement of the mounting part and the seat relative to the floor of the vehicle can be achieved by synchronizing the first and the second drive means.

This known seat rotation assembly, however, has a number of drawbacks or can cause problems. The construction is relatively complicated and requires both the base unit and the mounting part to be movable relative to the vehicle and to each other, which requires the provision of several movable parts. The inclusion of several movable parts in turn increases the risk of wear and malfunctioning.

Moreover, the construction requires the provision of separate mechanical drive means in achieving movement of respective moveable parts and mechanical or electrical means for synchronizing the independent movements of both the mounting part and the base unit. These drive means and synchronization will, of course, incur additional costs and constitute a malfunctioning source.

The rails and the co-acting elements disposed on the base unit required to achieve displacement of the base unit to the floor of the vehicle require a certain amount of head room or vertical space, resulting in a relatively large rotational assembly and therewith in an undesirable construction height.

In order to be able to utilize the mobility of the base unit in the longitudinal direction for setting a required driving or travelling position, it is necessary that the earlier known construction will also include means for disconnecting or inactivating the synchronization between the displacement movement and rotational movement of the mounting part and the base unit respectively.

### Summary of the present invention

Accordingly, an object of the present invention is to provide a vehicle seat rotating assembly that will allow simultaneous rotation and displacement of the mounting part relative to the floor of the vehicle, and that also has a simple and functionally reliable construction.

Another object is to provide such a rotational assembly that can be readily installed and that is comparatively inexpensive to manufacture.

Another object is to provide such a rotational assembly which has a low installation height and which affords safety to the user.

Another object of the invention is to provide such a rotational assembly with which displacement of the seat can be achieved in the absence of its rotation, in order to achieve ergonomic adjustment of the seat in the longitudinal direction of the vehicle.

These and other objects of the invention are achieved with a rotational assembly of the kind defined in the preamble of claim 1 and that have the special technical features in the characterizing part of said claim. Because the base unit is immovably fixed to the floor of the vehicle and because the mounting part is both rotatable and linearly displaceable relative to the base unit the desired movement pattern can be achieved by driving a single moveable element. The construction can therefore be made much simpler than in the case of prior known technology, which in turn results in reduced manufacturing costs and enhanced functional reliability. The invention also requires the provision of solely one drive means for achieving both the rotation and the linear displacement of a seat mounted on the mounting part. The fact that the base unit is fixed immovably to the floor of the vehicle eliminates the requirement of rails or other displacement elements for the base unit, which greatly reduces the total height of the assembly.

By arranging the mounting part for rotation about a rotational axis that can be displaced linearly parallel with the longitudinal direction of the vehicle the described displacement and rotation of a mounted seat about the B-post of the vehicle can be readily achieved, and can also be readily achieved about the C-post of the vehicle when the assembly is placed adjacent the rear seat.

Thorough and precise guidance of the desired movement of the mounting part can be achieved readily and in a highly space-saving manner by using two or more pairs of mutually engaging, co-acting and outwardly protruding elements and corresponding guide channels. In each pair, one of the outwardly projecting elements and its guide channel is disposed adjacent the mounting part and the other is disposed adjacent the base unit. This guiding assembly also minimizes effectively the risk of the elements jamming against each other. The outwardly projecting elements are conveniently provided with flanges or lips or the like that function to prevent the outwardly projecting elements from moving out of their engagement with respective guide channels. This enables a very strong bond to be achieved between the mounting part and the base unit, which results in highly effective traffic safety owing to the fact that the mounting part and the vehicle seat will be held in place even if the seat is subjected to very strong forces, for instance in the event of a collision. Traffic safety can be further enhanced by including a third and further pairs of flanged outwardly projecting elements and corresponding channels disposed respectively on the mounting part and the base unit.

Movement of the mounting part is conveniently driven with the aid of a rotating gear drive or the like on the outwardly projecting element of the pair, which is in co-acting engagement with a rack that is disposed adjacent the corresponding guide channel and that follows the contours of said guide channel. The gear drive is suitably driven by an electric motor. This results in a highly simple, operational and space-saving drive with which the full desired movement of the seat can be achieved solely by driving the electric motor in one direction of rotation or the other. Thus, the present invention requires the use of only one drive means, therewith avoiding all synchronization of different drive means.

By forming the two guide channels such as to include at least one pair of mutually parallel and rectilinear guide paths, it is possible to achieve solely linear displacement of the assembly in the absence of rotation of the mounting part, by virtue of the two outwardly projecting elements moving relative to the guide channels along said parallel paths. Such linear displacement in the absence of rotation may, for instance, be used to set the position of the seat in the longitudinal direction of the vehicle. The inventive rotatable assembly can therewith also be used to provide a comfortable and ergonomic vehicle driving or travelling position for the user without needing to be especially adapted to this end.

By forming the base unit and the mounting part as mutually abutting plates there is achieved a very simple method of obtaining a bearing between base unit and mounting part, this bearing allowing said relative movement and also taking up the load exerted by the seat. In order to reduce the friction between the two plates a friction-reducing material, for instance a polymer material, may conveniently be provided between the two bearing plates.

With the intention of enhancing traffic safety, the mounting part is suitably provided with an anchoring element which will enable a seat belt latching means to be fitted to the mounting part, for instance with the aid of a wire, a flat bar or iron hoops or corresponding elements. This will ensure that the seat belt will always be in the correct position when inserted into the latch, regardless of the set positions of the mounting part and the vehicle seat.

Other properties of and other advantages afforded by the present invention will be evident from the following detailed description and from the accompanying claims.

### Brief description of the drawings

There now follows a detailed exemplifying description of an embodiment of the present invention with reference to the figures of the accompanying drawings, in which
Fig. 1A-F are perspective views of one embodiment of a rotational assembly according to the present invention and show the assembly with the mounting part disposed in different positions relative to the base unit;
Fig. 2 is an exploded view of the rotational assembly shown in figures 1A-F;
Fig. 3 is a plan view from above of the rotational assembly shown in figures 1A-F;
Fig. 4 is a cross-sectional view taken on the line A-A in figure 3;
Fig. 5 is a plan view taken from the rear (from below in figure 4) of the rotational assembly shown in figures 1A-F;
Fig. 6 is a sectional view taken on the line B-B in figure 5.

### Detailed description of proposed embodiments

As in the case of the above text, directional and positional determinations are used in the following text, such as forwards, rearwards, upwards, outwards, lower, upper, etc. These determinations relate to directions and positions relative to a vehicle when the rotational assembly is mounted in the vehicle. The determinations are used to facilitate an understanding of the description and shall not be seen as limitative of the invention or its protective scope.

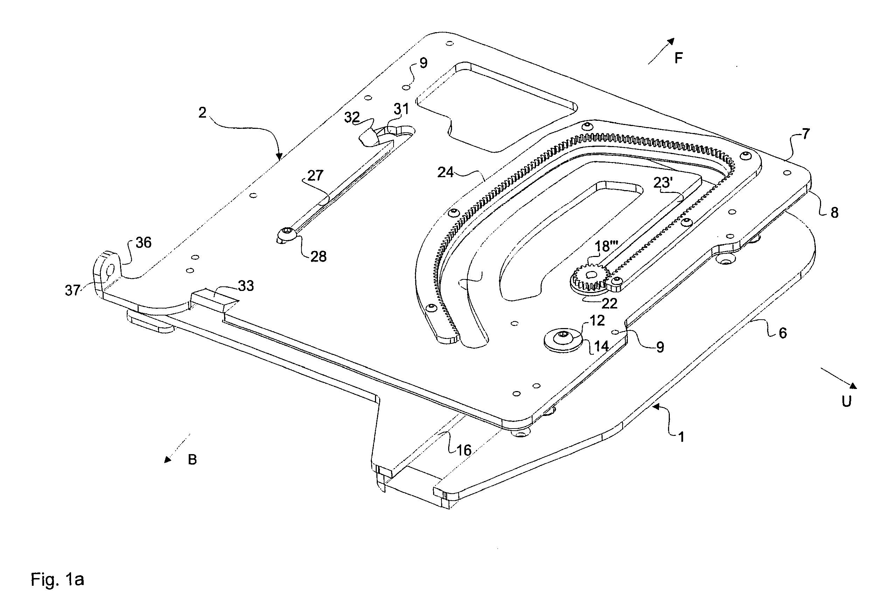

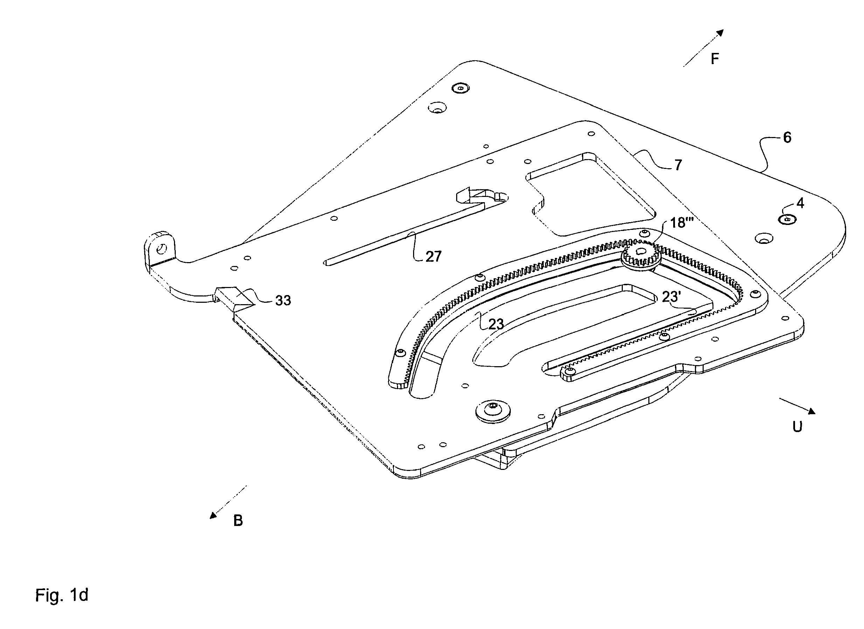

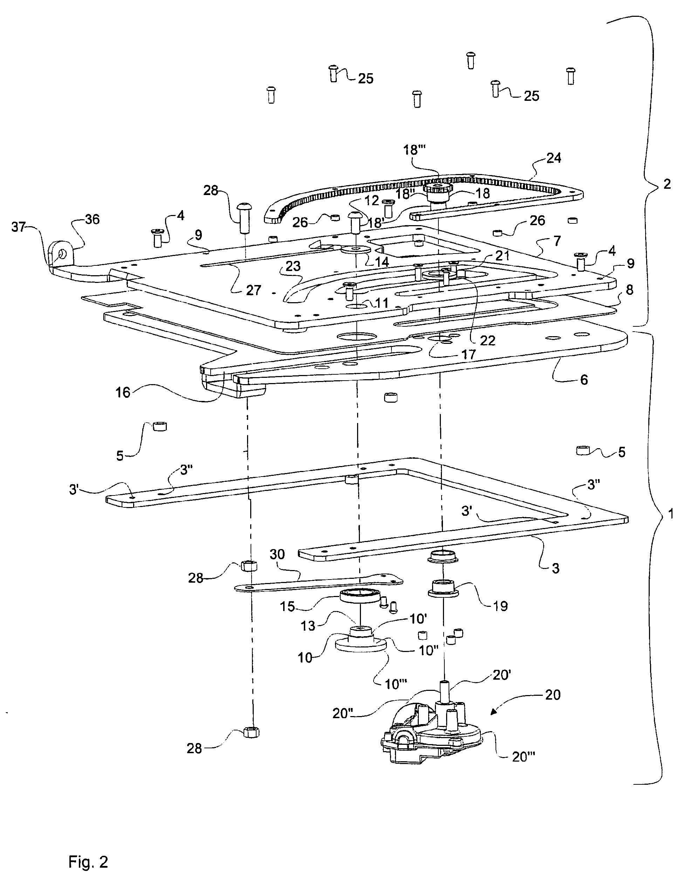

Turning primarily to figures 1a and 2 it will be seen that the inventive rotational assembly includes a base unit 1 and a mounting part 2.

The base unit 1 is intended to be fixed immovably to the floor of an automotive vehicle and includes to this end an affixing bracket 3 which has a number of first screw holes 3'.

These screw holes 3' enable a number of different types of mounting elements (not shown) such as legs, blocks, frames or the like to be fastened to the affixing bracket 3. The mounting elements are chosen in accordance with the vehicle in which the rotational assembly shall be fitted and will accordingly have different configurations that conform to the elements used for securing standard vehicle seats to the floor of the vehicle concerned. The inventive assembly can thus be subsequently mounted in a number of different vehicle models without needing to adapt the assembly or the vehicle per se. The affixing bracket 3 also includes a number of second screw holes 3 " for fastening the bracket 3 to a lower plate 6 that forms the main component of the base unit 1, with the aid of screws 4 and spacers 5.

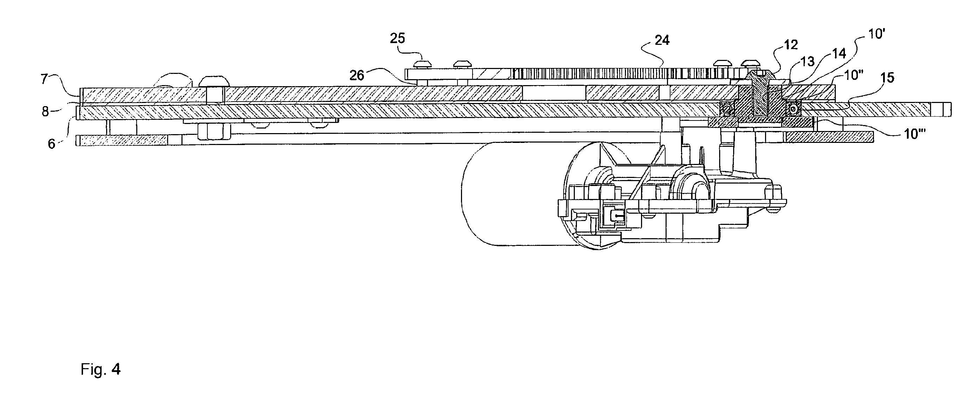

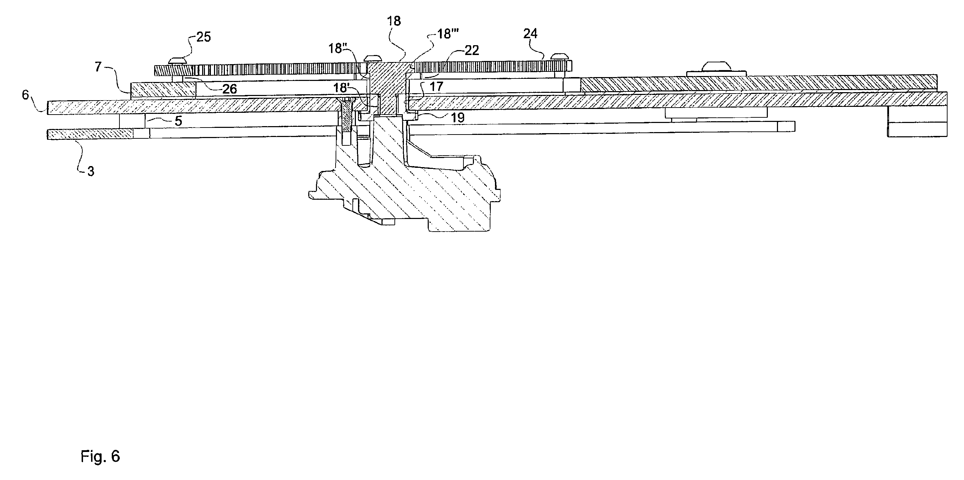

The mounting part 2 of the assembly includes an upper plate 7 which is parallel with the lower plate 6. An intermediate relatively thin low-friction polymer plate 8 is provided on the underside of the upper plate 7. As will best be seen from figures 4 and 6, the upper plate 7 with its polymer plate 8 attached thereto lies in abutment with the lower plate 6 of the base unit 2. The polymer plate 8 is designed and disposed to reduce the friction between the upper plate 7 and the lower plate as the mounting part 1 moves relative to the base unit. Both plates 7, 8 have relatively large contact surfaces that enable heavy loads exerted by a seat mounted on the mounting unit and occupied by a user to be transmitted to the base unit without the risk of the components of the assembly suffering load damage.

The upper plate 7 of the mounting part 2 includes a number of mounting holes 9 that are able to accommodate mounting screws (not shown) for fastening a seat (not shown) to the upper plate 7. The seat may either be fastened directly to the upper plate or the mounting holes 9 may also be used to fasten slide bars or other mounting elements on the mounting part. Such slide bars or other mounting elements may be used when, for instance, it is desirable to enable the seat to be displaced relative to the base unit also as the seat is turned to face outwards towards a side door. Such slide bars or other mounting elements can also be used to facilitate the transfer and mounting of a wheel-chair seat that shall be fastened to the assembly and there used as a vehicle seat.

As will best be seen from figures 2 and 4, an element that projects downwards from the upper plate 7 in the form of a first trunnion 10 is received in a circular through-penetrating hole 11 in the upper plate 7. The first trunnion has an upper narrower part 10', an intermediate slightly broader part 10" and a lower stop flange or lip 10"' which is broader than the intermediate part 10". A ball bearing 15 is disposed around the intermediate 10". The first trunnion 10 is fixed to the upper plate 7 by means of a screw 12 which is screwed from above into an axially upwards open threaded hole 13 in the first trunnion 10. The position of the first trunnion 10 in the hole 11 is affixed by the fit of the trunnion part 10' in the hole 11 and by the abutment of the screw 12 and an intermediate associated washer 14 with the upper side of the upper plate 7 and by the abutment of the intermediate trunnion part 10' with the upper side of the upper plate 7.

The lower plate 6 includes a rectilinear first guide channel 16 in the form of a through-penetrating slot provided in said lower plate 6. The span of the first guide channel 16 is generally equal to the outer diameter of the ball bearing. The first trunnion 10 together with the ball bearing 15 and the first guide channel 16 constitute a first pair of co-acting elements for guiding movement of the upper plate 7 relative to the lower plate 6. The first trunnion 10 also defines the axis of rotation of the upper plate 7 about which said upper plate 7 is able to rotate in relation to the lower plate 6 with the aid of the ball bearing 15. Because the ball bearing 15 can be displaced along the first guide channel 16 and guided thereby, the first pair of co-acting elements enables the axis of rotation of the mounting part 2 to be displaced linearly backwards and forwards relative to the base unit 1 by the rotational axis of the mounting part 2.

The stop flange 10"' of the first trunnion that lies against the underside of the lower plate 6 and whose outer diameter is greater than the cross-sectional span of the first guide channel 16 also prevents the upper plate 7 and the lower plate 6 from being separated one from the other.

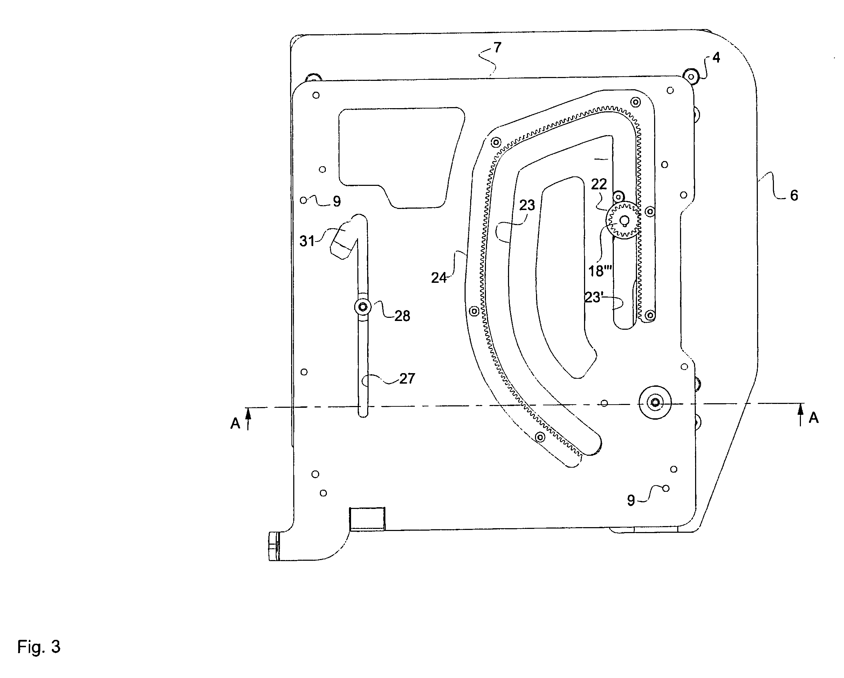

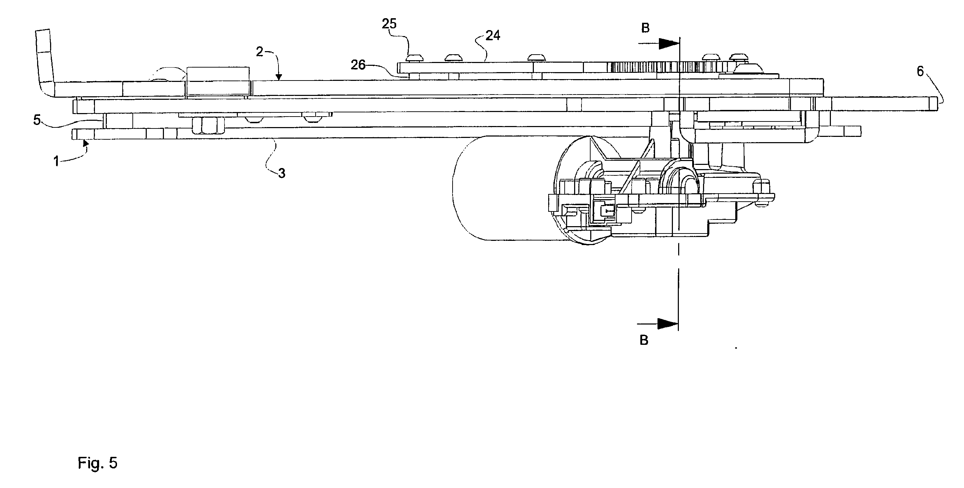

As will be best be seen from figures 2 to 6, the lower plate 6 includes a through-penetrating hole 17 which accommodates an element in the form of a rotatable second trunnion 18 which projects up from the lower plate 6. This second trunnion 18 includes a relatively narrow bottom part 18', an intermediate part 18" and an upper broadest tooth part which forms a gear drive 18"'. The bottom part 18' is accommodated in a bushing 19 which is, in turn, disposed concentrically in a bearing sleeve 19" in the through-penetrating hole 17. The bearing sleeve 19" extends axially upwards around the intermediate broader part 18". The second trunnion 18 is connected by its bottom part 18' to an output shaft 20' of a drive unit 20, which also includes an electric motor 20' and gearing 20"'. The drive unit 20 is affixed to the lower plate 6, beneath said plate, by means of screws 21. A washer 22 whose outer diameter is greater than the upper part 18"' of the toothed second trunnion is fitted on the intermediate part 18" of the trunnion.

The upper plate 7 also includes a curved second guide channel 23 in the form of a through-penetrating slot provided in the upper plate 7. The intermediate part 18" of the second trunnion 18 is received in the second guide channel 23. The outer diameter of the bearing sleeve 19" that accommodates the intermediate part 18" is generally equal to or slightly smaller than the cross-sectional span of the second guide channel 23, so that the second trunnion 18 is allowed to rotate in the channel 23 while, at the same time, guiding effectively parallel displacement of the plates 6, 7 relative to one another when the channel 23 is displaced relative to the trunnion 18. A curved rack 24 whose curvature corresponds to the curvature of the second guide track 23 is affixed to the upper plate 7 along the curved guide track 23. The rack 24 is secured to the upper plate 7 by means of screws 25 and intermediate spacing washers 26, such that the rack 24 will be spaced from the upper plate 7 by a distance corresponding to the thickness of the washer 22.

The upper tooth portion or gear drive 18"' of the second trunnion 18 is in driving engagement with the corresponding teeth of the rack 24. The washer 22 abuts the upper side of the upper plate 7 on respective sides of the second guide channel 23 and projects partially in beneath the rack 24. The washer 22 is also supportive against the upper broadest tooth portion 18''' of the second trunnion and therewith forms a stop flange or lip on the second trunnion 18, this stop flange preventing the upper plate 7 from being lifted away from the lower plate 7

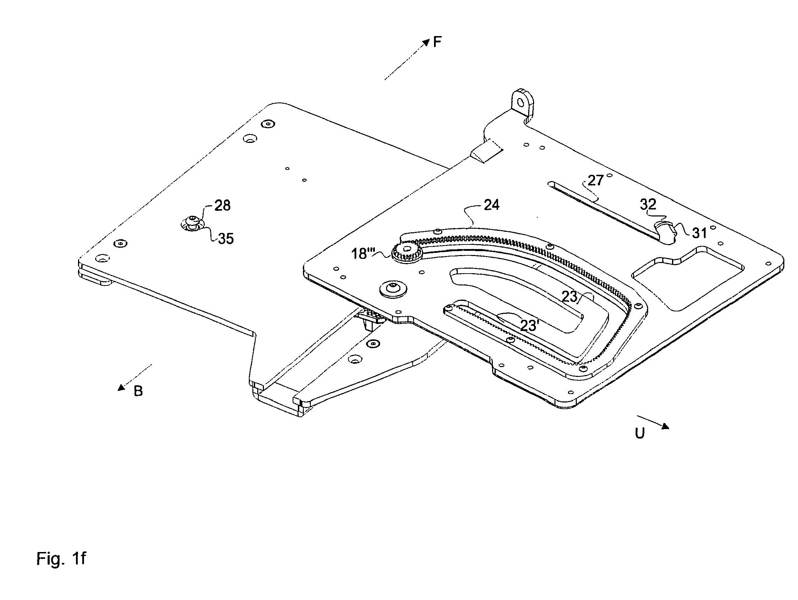

A generally rectilinear third through-penetrating channel 27 is provided in the upper plate 7. This third channel 27 is spaced from the first guide channel 16 and extends generally parallel therewith. A third outwardly projecting element 28, in the form of a screw, is affixed to the lower plate 6 so as to project up through a hole 35 therein (see figure 1F) and through the third channel 27. The lower end of the third outwardly projecting element is affixed by two nuts adjacent a resilient tongue 30 which urges the third outwardly projecting element upwards. The tongue 30 is also affixed in the lower plate 6 with the aid of screws. The third outwardly projecting element 28 has an upper head whose diameter is greater than the cross-sectional span of the third channel 27. One end of the channel 27 has a laterally directed bulge 31 whose cross-section is greater than the size of the head of the third projecting element. The upper plate includes at the bulge 31 a first upwardly bent flap 32. A second upwardly bent flap 32 is provided on the upper plate at the rear edge of the upper plate 7.

The third channel 27 and the third outwardly projecting element form a further pair of co-acting elements that prevent the upper plate 7 from being lifted away from the lower plate.

The upper plate 7 also includes an anchoring means 36 in the form of an upwardly bent corner flap which projects laterally out from the upper plate. The flap 36 includes a through-penetrating hole 37. The anchoring element 36 can be used to affix a safety belt latching means (not shown), for instance with the aid of a wire, a flat bar or iron hoops or the like, whose one end is fixed to the hole 37 and whose other end is anchored in the safety belt latching means. This lateral outward projection of the anchoring element enables the safety belt latching means to be anchored safely even should the width of the seat exceed the width of the upper plate. Anchoring of the safety belt latching means in the upper plate 7, which moves together with the seat, enables the safety belt to be placed on the person occupying the seat in a correct, comfortable and traffic safe fashion, even when the seat is in different positions.

The function of the seat rotating and displacing assembly will now be described with reference to figures 1A-E. The figures illustrate a rotational assembly which is intended to be mounted adjacent the front passenger seat of an automotive left-hand steered vehicle, in other words at the location closest to the front right-hand side door. The figures also show movements of the vehicle in a forwards, rearwards and outwards direction, i.e. towards the side door, with respective arrows, F, B and U.

Figure 1A illustrates the assembly with the upper plate 7, and therewith also the mounting part 2, in a forward starting position relative to the base unit 2 and its lower plate 6. In this position, a vehicle seat mounted on the upper plate 7 is in a forwardly facing position, in the direction of the arrow F. By activating the electric motor 20' (figure 2) so as to cause the gear drive 18"' to rotate clockwise, the upper plate 7 will be driven rearwardly in the direction B, as a result of engagement of the gear drive 18"' with the rack 24. Because the first part 23' of the second guide channel 23 that passes the second trunnion 18 is rectilinear and parallel with the second guide channel 16, which guides the movement of the first trunnion 10 that defines the axis of rotation of the upper plate, the upper plate will not be rotated.

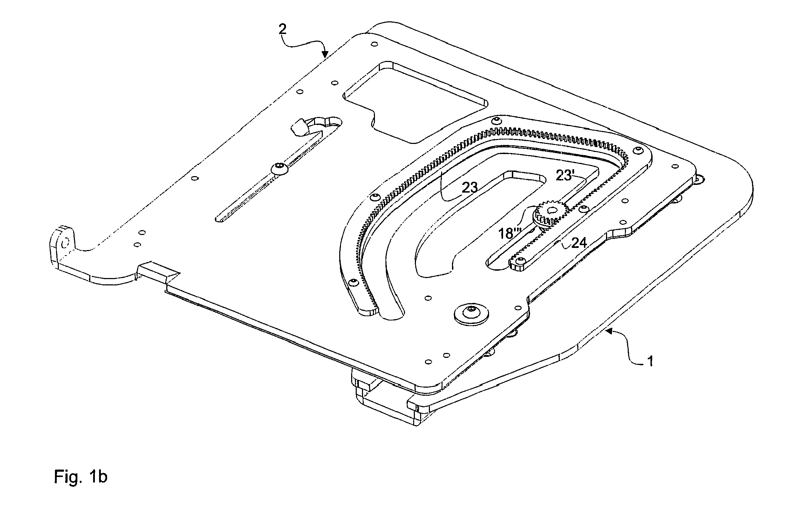

When driving the motor clockwise or anti clockwise such that only the first rectilinear path 23' will pass the second trunnion 18, this part of the guide channel can thus be used to position the chair comfortably and ergonomically in the longitudinal direction of the vehicle (see figure 1B).

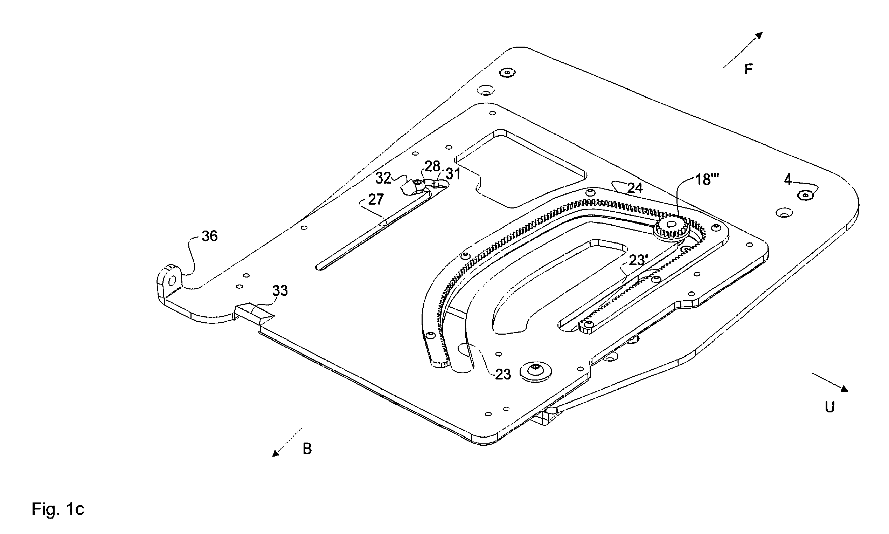

When the assembly shall be used to facilitate entry into or departure from the vehicle the motor and the gear drive 18"' are driven so that subsequent to the first rectilinear path 23' they will follow the pathway of the second guide channel 23 and pass the second trunnion 18. The upper plate 6 will then successively take the positions shown in figures 1c-e and finally reach the end position shown in figure If. As will evident from figure 1f, the seat mounted on the upper plate 7 will have been rotated clockwise through an angle slightly greater than 90° in this end position and will, at the same time have been displaced forwardly and outwardly towards or partially through the side door of the vehicle. It will be understood that entry into and departure from the vehicle will be greatly facilitated, for instance in respect to a handicapped person.

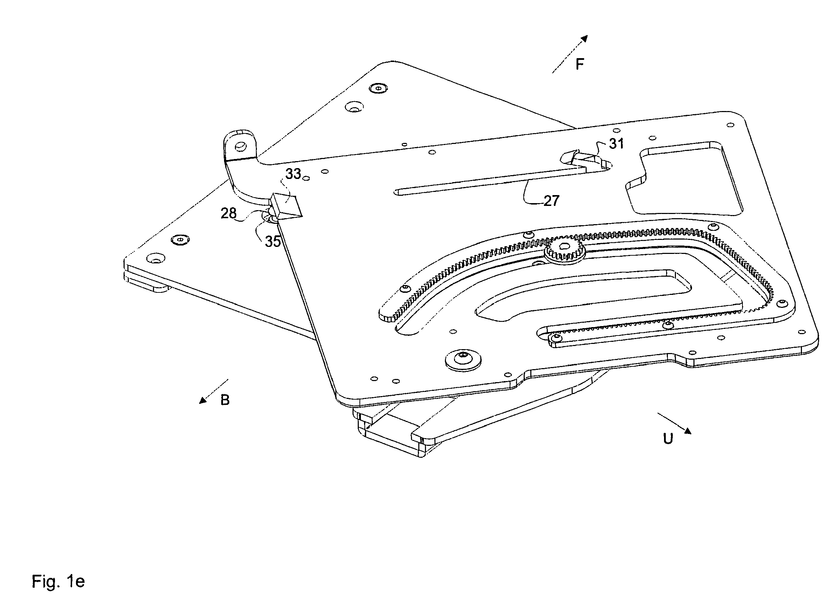

As is clearly evident from figure 1c, the upper head of the third outwardly projecting element 28 can be removed from its retaining engagement with the third channel 27 when said outwardly projecting element is taken up in the hollow bulge 31 that extends laterally in the channel. The head then comes into contact with the underside of the outwardly bent or folded flap 32 and is therewith pressed down in the hole 35 against the outwardly acting spring force exerted by the tongue 30 (figure 2). As the upper plate 7 continues to move, the outwardly projecting third element is held depressed in the hole 35 by the underside of the upper plate 7 and will spring-up again when the second outwardly bent flap 33 of the upper plate 7 passes the third outwardly projecting element (see figure 1e).

The third pair of mutually co-acting elements 27, 28 thus reinforces the union of the two plates 6, 7 so as to further enhance traffic safety during a journey. When this reinforced union of the plates is no longer required due to the need for the vehicle to be stationary so that the seat can be rotated and displaced, the engagement between the holding elements in said third pair is disconnected automatically so as to enable the seat to be rotated.

In order to return the upper plate from the end position, shown in figure 1f, to the starting position in figure 1a, the motor is activated in an opposite direction so that the gear drive 18"' will rotate anti clockwise. The upper plate will then successively pass the positions shown in figure 1a-f in a reverse order. When the upper plate passes the position shown in figure 1e, the third outwardly projecting element 28 will again be pressed down into the hole 35 by virtue of coming into contact with the underside of the second outwardly bent flap 33. When the upper plate 7 passes the position shown in figure 1c, the third outwardly projecting element will again spring-up in the bulge 31 and can then pass into holding engagement with the third channel 27.

The described inventive assembly has been tested by the Swedish National Testing and Research Institute in accordance with the following traffic safety testing procedure; ECE-R17, EEC74/408, EEC96/37, VVfs2003:22 and 76/115/EEC. The assembly was found to achieve all requirements placed upon the assembly.

Although the invention has been described above with reference to an exemplifying embodiment thereof, it will be understood that the invention is not limited to this described embodiment and that variations can be freely made within the scope of the accompanying claims. For instance, only one assembly designed to be placed on the right-hand side of the vehicle has been shown and described. It will be understood, however, that the invention also includes assemblies for mounting on the left-hand side of an automotive vehicle, particularly in the driver's place of a car that is a left-hand drive. A left-hand mounted rotatable assembly can, in actual fact, be readily achieved with the illustrated components described above, simply by using certain of these components in an inverted position.

According to one embodiment (not shown) a manual release or disengagement device can be provided between the output shaft 20' of the drive unit and the second trunnion 18. Such a device will enable the upper plate to be released for manual rotation and linear displacement of the seat should the supply of electricity to the electric motor fail as a result of a flat vehicle battery.

## Claims

1. A vehicle seat rotatable assembly that comprises a base unit which is designed to be fitted to the floor of an automotive vehicle or the like, and a mounting part on which a vehicle seat is intended to be affixed, wherein the mounting part is rotatable and linearly displaceable relative to the floor of the vehicle when the assembly is mounted in a vehicle, **characterized in that** the base unit (1) is designed to be affixed immovably to the floor of the vehicle; and **in that** said mounting part (2) is displaceable rectilinearly and rotatable relative to the base unit.

2. An assembly according to claim 1 in which the mounting part (2) is rotatable about a rotational axis which can be displaced backwards and forwards relative to the base unit (1) along a line which is generally perpendicular to said axis.

3. An assembly according to claim 1 or 2, comprising a first and a second pair of mutually coactive elements for guiding the movement of the mounting part (2) relative to the base unit (1), wherein said pairs each include an outwardly projecting element which is affixed to either the mounting part or to the base unit, and a guide channel (16, 23) which receives and guides the outwardly projecting element and which is provided in the other mounting part or the base unit.

4. An assembly according to claim 3 in which the outwardly projecting element of the first pair includes a first trunnion (10) which defines the rotational axis of the mounting part and the guide channel (16) of the first pair is comprised of a rectilinear opening.

5. An assembly according to claim 4 in which the trunnion (10) of the first pair is affixed to the mounting part (2) and the guide channel (16) of said first pair is provided in the base unit (1).

6. An assembly according to any one of claims 3-5 in which the outwardly projecting element of the second pair includes a second trunnion (18) and in which the guide channel (23) of said second pair is curved.

7. An assembly according to any one of claims 3-6 in which the guide channel (23) of the second pair has a rectilinear part (23') which is parallel with the guide channel (16) of the first pair so as to enable the mounting part (2) to be displaced rectilinearly relative to the base part (1) in the absence of any rotation when the outwardly projecting element of the second pair is displaced along said rectilinear part (23') relative to the guide channel (23) of the second pair.

8. An assembly according to any one of claims 6-7 in which the second trunnion (18) is affixed to the base unit (1) and the curved guide channel (23) is provided in the mounting part (2).

9. An assembly according to any one of claims 6-8 in which the outwardly projecting element of the second pair includes a driven rotatable drive that is in driving engagement with a curved element that is affixed to that one of the mounting part (2) or the base unit (1) which includes the curved guide channel (23) of the second pair and the curvature of which coincides generally with the curvature of the curved guide channel (23) so as to achieve relative movement between the base unit (1) and the mounting part (2).

10. An assembly according to claim 9 in which the rotatable drive means is a gear wheel (18"') which is driven by a motor (20") and the curved element is a rack (24).

11. An assembly according to any one of claims 1-10 in which the mounting part (2) and the base unit (1) each include a plate (7, 6), which plates are in mutual abutment.

12. An assembly according to any one of claims 1-10, in which the mounting part (2) and the base unit (1) each include a plate (7, 6), which are separated by an intermediate friction reducing material arranged between the respective plate (7, 6) of the mounting part (2) and the base unit (1).

13. An assembly according to any one of claims 3-12 in which the outwardly projecting element in the first and/or the second pair of co-acting elements includes a stop loop or flange (10"', 22) which holds the outwardly projecting element in its guide channel (6, 23) in a manner to counteract separation of the mounting part (2) from the base unit (1).

14. An assembly according to any one of claims 3-13 comprising a third pair of co-acting outwardly projecting elements (28) and channel (27), wherein the outwardly projecting element includes a stop loop or flange which holds the outwardly projecting element in the channel so as to counteract separation of the mounting part (2) from the base unit (1).

15. An assembly according to any one of claims 1-12 in which the mounting part (2) includes an anchoring device (26) for a safety belt latching means.
